(19) Europäisches Patentamt
European Patent Office
Office européen des brevets

(11) Publication number: 0 352 485 A2

# (12) EUROPEAN PATENT APPLICATION

(21) Application number: 89111582.6

(22) Date of filing: 26.06.89

(51) Int. Cl.4: C08L 81/06 , //(C08L81/06, 67:00)

(30) Priority: 25.07.88 US 223417

(43) Date of publication of application: 31.01.90 Bulletin 90/05

(84) Designated Contracting States: DE FR GB IT NL

(71) Applicant: GENERAL ELECTRIC COMPANY
1 River Road
Schenectady New York 12305(US)

(72) Inventor: Gaafar, Gail Magda
3315 Wimberg Avenue
Evansville Indiana 47712(US)

(74) Representative: Catherine, Alain
General Electric France Service de Propriété Industrielle 18 Rue Horace Vernet
F-92136 Issy-Les-Moulineaux Cedex(FR)

## (54) Sulfone polymer blends.

(57) A modified sulfone polymer composition that has lower processing temperatures is comprised of, in admixture, a sulfone polymer and a polyester resin.

EP 0 352 485 A2

# SULFONE POLYMER BLENDS

## BACKGROUND OF THE INVENTION

Sulfone polymers are well known as being heat resistant plastic materials that provide long term load bearing properties at elevated temperatures, the ability to be molded to extremely close tolerances together with very low creep characteristics. In addition, these materials provide chemical resistance, boiling-water and steam resistance, and electrical properties that remain stable over a wide temperature range. These materials are disadvantageous in the sense that they require relatively high processing temperatures.

Therefore, it would be advantageous to provide a modified sulfone polymer that can be processed at lower temperatures while maintaining the desired physical characteristics of the unmodified materials.

It has now been discovered that such desirable sulfone polymers may be provided by modifying a sulfone polymer with a modifying amount of at least one polyester. The resulting material displays lower processing temperatures while maintaining exceptionally high heat resistance.

## DESCRIPTION OF THE INVENTION

The sulfone polymers useful in the process of the present invention are well known in the art. These sulfone polymers are transparent, heat-resistant, ultra-stable, high-performance engineering thermoplastics. Three related polymers are encompassed by the generic term "sulfone polymers" -they are polysulfones, polyethersulfones and polyarylsulfones.

The sulfone polymers are amorphous in nature and have low flammability and smoke emission. They all have in common sulfone groups, particularly the diaryl sulfone group, and ether groups in their monomeric backbone.

Polysulfone has high resistance to acids, alkali, and salt solutions, and good resistance to detergents, oils, and alcohols, even at elevated temperatures under moderate stress. The dielectric constant of polysulfone is very low and the dissipation factor varies insignificantly over a wide temperature range.

Polysulfone is used in medical instrumentation, food processing, including piping, food handling applications, steam table pans, microwave ware, coffee makers, coffee decanters, and beverage dispensing tanks. Polysulfone is also used for corrosion-resistant piping, both transparent and glass fiber-bonded, tower packing, pumps, filter modules, support plates, and membranes. Other uses include camera and watch cases, battery-cell frames and housings, and automotive and aerospace components.

Polyethersulfone is highly resistant to acids, concentrated alkalies, oils, greases, aliphatic hydrocarbons, and alcohols, and both leaded and unleaded gasolines at ambient and elevated temperatures.

The polymer is a practical high-temperature dielectric material. Its low loss tangent remains reasonably constant at about 0.001 at 60 Hz. over the temperature range 68 to 356 °F. Polyethersulfone is used for such high-temperature electrical parts as connectors, motor components, lamp housings, and alternator insulators. It is used in sterilizable medical components, aircraft interior trim, fluid control devices and adhesive applications. Polyethersulfone film and sheet are used in electrical and aerospace applications.

Polyarylsulfone is hydrolytically stable and resists commonly used acids and bases over a broad temperature range, making it useful in many process equipment applications.

The preferred sulfone polymer for the present invention is polyethersulfone which is manufactured, for example, by ICI American, Inc. Another preferred sulfone polymer is polyphenylsulfone, which is manufactured, for example, by Union Carbide.

Sulfone polymer materials can be processed on conventional screw injection and extrusion machinery and, generally, when not modified according to the present invention, require high processing temperatures.

The polyester resins utilized in this invention include, in general, linear saturated condensation products of diols and dicarboxylic acids, or reactive derivatives thereof. preferably, they will comprise condensation products or aromatic dicarboxylic acids and aliphatic diols. It is to be understood that it is also possible to use polyesters such as poly(1,4-dimethylol cyclohexane dicarboxylates, e.g., terephthalates). In addition to phthalates, small amounts of other aromatic dicarboxylic acids, such as napthalene dicarboxylic acid, or aliphatic dicarboxylic acids, such as adipic acid, can also be present in preferred compositions. The diol constituent can likewise be varied, in the preferred embodiments, by adding small amounts of cycloaliphatic diols. In any event, the preferred polyesters are well known as film and fiber formers, and they are provided

by methods outlined in Whinfield, U.S. 2,465,319 and Pengilly, U.S. 3,047,539 and elsewhere. The preferred polyesters will comprise a poly(alkylene terephthalate, isophthalate or mixed isophthalate-terephthalate, e.g., up to 30 mole percent isophthalate), said alkylene groups containing from 2 to about 10 carbon atoms, e.g., poly(ethylene terephthalate), or poly(1,4-butylene terephthalate). It is preferred to use poly(1,4-butylene terephthalate) and/or poly(ethylene terephthalate) as the preferred polyester resin component of the present compositions.

While poly(1,4-butylene terephthalate) homopolyester is the preferred poly(butylene terephthalate) polymer, copolyesters thereof are also suitable. Such copolyesters generally comprise at least about 70 mole percent, and preferably at least 80 mole percent, based on total monomer content, of butylene and terephthalate units. The comonomer may be either dicarboxylic acid or diol or a combination of the two. Suitable dicarboxylic acid comonomers include the $C_8$ to $C_{16}$ aromatic dicarboxylic acids, especially the benzene dicarboxylic acids, i.e. phthalic and isophthalic acids and their alkyl, e.g., methyl, derivatives and $C_4$ to $C_{16}$ aliphatic and cycloaliphatic dicarboxylic acids including, for example, sebacic acid glutaric acid; azelaeic acid, tetramethyl succinic acid; 1,2-, 1,3- and 1,4-cyclohexane dicarboxylic acids and the like, as mentioned above. Suitable diol comonomers include but are not limited to $C_2$ to $C_8$ aliphatic and cycloaliphatic diols, e.g. ethylene glycol, hexanediol, butanediol and 1,2-, 1,3- and 1,4-cyclohexanedimethanol. Other suitable diols are well known to those skilled in the art.

The amount of polyester resin employed in the practice of this invention may vary from about 1 to about 99 parts by weight per hundred parts of the total composition of polyester resin and sulfone polymer, and preferably from about 3 to about 40 parts by weight of the total composition. Most preferably, the polyester resins are employed in an amount of from about 5 to about 30 parts per hundred parts of the total composition of polysulfone polymer and polyester resin.

The instant composition may also optionally contain such commonly known and used additives as oxidative stabilizers; thermal stabilizers; ultraviolet radiation stabilizers; fillers; and pigments.

Particularly useful stabilizers are hindered phenols which include phenols of the formula:

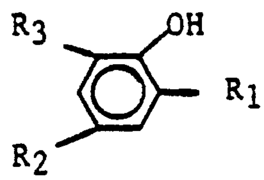

wherein $R_1$ and $R_3$ are hydrocarbon groups having from one to about 20 carbon atoms, and $R_2$ is a hydrogen atom or a hydrocarbon group having from one to about 20 carbon atoms, and bisphenol of the formula

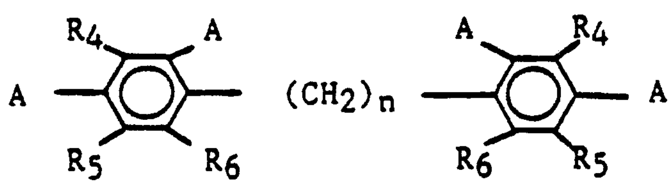

wherein $R_4$, $R_5$ and $R_6$ are each a hydrogen atom or a hydrocarbon group having from one to about 20 carbon atoms, one of the two A's on each ring is a hydroxyl group and the other A on each ring is a hydrogen atom or a hydrocarbon group having from one to about 20 carbon atoms; and n is an integer of from 0 to about 20.

Preferred hindered phenols useful in this invention include 2,6-di-tert-butyl-4-methyl-phenol, commonly known as BHT (sold under the tradename Ionol by Shell Chemical Co.); 4,4-methylene bis(2,6-di-tert-butylphenol) and 2,6di-tert-butylphenol (sold under the tradename Ethyl 702 and Ethyl 744, respectively, by Ethyl Corp.); and tetrakis[methylene 3-(3′,5′-di-tert-butyl-4′-hydroxyphenyl] proprionate) methane and stearyl-3-(3′5′-di-tert-butyl-4′-hydroxyphenyl)proprionate (sold under the tradenames Irganox 1010 and Irganox 1076, respectively, by Ciba-Geigy).

## PREFERRED EMBODIMENT OF THE INVENTION

In order to more fully and clearly illustrate the present invention, the following specific examples are presented. It is intended that the examples be considered as illustrative rather than limiting the invention disclosed and claimed herein. In the examples, all parts and percentages are on a weight basis unless otherwise specified.

Example 7 below is not to be considered as part of the present inverition but rather is illustrative of an unmodified polyethersulfone material.

In all the examples, the sulfone polymer utilized was a polyethersulfone, Victrex 3600G, which was manufactured by ICI Americas, Inc.

## EXAMPLE

The following general procedure was used for blending and extruding the composite blends of the present invention:

All of the components except the sulfone polymer were blended for ten minutes in a fifty-gallon drum tumbler. The components were then extruded in a 2-1/2" Egan single screw extruder. The sulfone polymer was fed in the rear of the extruder and the blend was then fed in a sidefeed. The extruded strands were cooled and cut by a rotating knife.

The table below lists the proportion of each component of the sulfone polymer blend as well as the resulting properties, and the barrel zone temperature and molding temperature of each composition. The Izod impact data was determined from tests based on ASTM method D-256. The heat deflection temperature (HDT) was determined based on ASTM method D-1637.

TABLE

| | EXAMPLE NO. | | | | | | |
|---|---|---|---|---|---|---|---|
| | 1 | 2 | 3 | 4 | 5 | 6 | 7 |
| PES | 90.0 | 80.0 | 85.0 | 90.0 | 80.0 | 85.0 | 100 |
| PBT | 10.0 | 20.0 | 15.0 | ---- | ---- | ---- | ---- |
| PET | ---- | ---- | ---- | 10.0 | 20.0 | 15.0 | ---- |
| STAB | 0.15 | 0.15 | 0.15 | 0.15 | 0.15 | 0.15 | 0.15 |
| BZT | 550 | 500 | 525 | 550 | 500 | 525 | 650 |
| MT | 545 | 480 | 520 | 545 | 480 | 520 | 600 |
| HDT | 390 | 387 | 390 | 378 | 375 | 376 | 397 |
| NI | 0.90 | 0.72 | 0.52 | 0.87 | 0.57 | 0.82 | 0.65 |

PES is Victrex 3600G
PBT is Valox 315
PET is poly(ethylene terephthalate)
STAB is Irganox 1076
BZT is barrel zone temperature (°F)
MT is molding temperature
HDT is heat deflection temperature (°F)
NI is the notched Izod (ft. lb./in)

It will thus be seen that the objects set forth in the preceding description are effectively obtained. Since certain changes may obviously be made in carrying out the process and manufacturing the compositions set forth above without departing from the scope of this invention, it is intended that all matters contained in the above description shall be interpreted as being illustrative and not in a limiting sense.

**Claims**

1. A sulfone polymer composition comprising, in admixture, at least one sulfone polymer and at least one polyester resin.

2. The composition of claim 1 wherein the polyester resin is present in an amount from about 1 to about 99 parts by weight per 100 parts by weight of the total composition of polyester resin and sulfone polymer.

3. The composition of claim 2 wherein the polyester resin is present in an amount of from 3 to about 40 parts by weight of the total composition of polyester resin and sulfone polymer.

4. The composition of claim 3 wherein the polyester resin is present in an amount from about 5 to about 30 parts by weight per 100 parts by weight of the total composition of polyester resin and sulfone polymer.

5. The composition of claim 1 wherein the sulfone polymer is polyethersulfone.

6. The composition of claim 1 wherein the sulfone polymer is polyarylsulfone.

7. The composition of claim 6 wherein the sulfone polymer is polyphenylsulfone.

8. The composition of claim 1 wherein the sulfone polymer is polysulfone.

9. The composition of claim 1 wherein the polyester resin is at least one of poly(ethylene terephthalate) or poly(butylene terephthalate).

10. The composition of claim 1 wherein the polyester is poly(ethylene terephthalate).

11. The composition of claim 1 wherein the polyester is poly(butylene terephthalate).

12. The composition of claim 11 wherein the poly(butylene terephthalate) is poly(1,4-butylene terephthalate).

13. The composition of claim 1 which further comprises a hindered phenolic stabilizer.